# EUROPÄISCHE PATENTSCHRIFT

(11) **EP 2 456 995 B1**
(45) Veröffentlichungstag und Bekanntmachung des Hinweises auf die Patenterteilung: **08.03.2017**
(21) Anmeldenummer: 10721514.7
(22) Anmeldetag: 01.06.2010
(51) Int. Cl.: F16F 1/38

(54) **VERBUND VON ELASTOMERLAGER UND EINER DIESES UMGEBENDEN HÜLSE**
ELASTOMER BEARING GROUP AND A SLEEVE SURROUNDING SAID GROUP
CORPS COMPOSITE FAIT D'UN PALIER ÉLASTOMÈRE ET D'UNE DOUILLE QUI ENTOURE CELUI-CI

(30) Priorität: 23.07.2009 DE 102009034337
(43) Veröffentlichungstag der Anmeldung: 30.05.2012
(73) Patentinhaber: Bayerische Motoren Werke Aktiengesellschaft, 80809 München (DE)
(72) Erfinder: ENGELMOHR, Franz, 82140 Olching (DE)
(86) Internationale Anmeldenummer: PCT/EP2010/057626
(87) Internationale Veröffentlichungsnummer: WO 2011/009669

(56) Entgegenhaltungen:
- DE-U1- 8 813 851
- FR-A1- 2 919 906
- JP-U- 6 054 936
- JP-U- 60 145 638
- US-A1- 2006 131 800

## Beschreibung

Die Erfindung betrifft einen formschlüssigen Verbund aus einem Elastomerlager und einer dessen kreiszylindrische Außenschale umgebenden Hülse nach dem Oberbegriff des Anspruchs 1.

Elastomerlager, die auch als Gummilager bezeichnet werden und beispielsweise bei radführenden Lenkern sowie Achsträgern von Kraftfahrzeugen zum Einsatz kommen, weisen in der Regel zwei Halteteile auf, mit denen sie einerseits am Lenker bzw. Träger und andererseits am Chassis des zugehörigen Kraftfahrzeugs jeweils ortsfest angebracht sind, und wobei zwischen diesen beiden Halteteilen ein Elastomerelement vorgesehen ist. Üblicherweise sind die Halteteile kreiszylindrisch geformt, wobei das äußere Halteteil eine im weiteren sog. Außenschale darstellt. Letztere wird zur Erzielung der genannten ortsfesten Verbindung in eine üblicherweise metallische Hülse eingepresst, wobei ein definierter Festsitz vorliegen soll. In Fällen, in denen ein solcher Festsitz durch einen einfachen Presssitz nicht sichergestellt werden kann, werden Elastormerlager teils zusätzlich in die Hülsen eingeklebt, was jedoch im Fertigungsprozess relativ aufwändig ist. In jüngerer Zeit werden die Außenschalen von Elastomerlagern in Kunststoff gefertigt. Hierbei ist ein Festsitz in der üblicherweise weiterhin metallischen Hülse überhaupt nicht mehr über Reibschluss wie bei einem reinen Presssitz, sondern nur noch über Formschluss möglich.

Eine formschlüssige Verbindung zwischen einer Außenschale eines Elastomerlagers und einer dieser umgebenden Hülse ist in Form von von der Innenwand der Hülse abstehenden Vorsprüngen beispielsweise in der US 2006/0131800 A1 gezeigt. Ähnliche mit einem Elastomerlager zusammenwirkende Vorsprünge zeigt die JP 6-054936 U.

Einen besonders festen und einfach herstellbaren formschlüssigen Verbund zwischen einem Elastomerlager und einer dessen kreiszylindrische, vorzugsweise aus einem Kunststoffmaterial bestehende Außenschale umgebenden Hülse, welche vorzugsweise aus einem metallischen Werkstoff besteht, aufzuzeigen, ist Aufgabe der vorliegenden Erfindung.

Die Lösung dieser Aufgabe ergibt sich mit den Merkmalen des Anspruchs 1 und besteht in einem formschlüssigen Verbund aus einem Elastomerlager und einer dessen kreiszylindrische Außenschale umgebenden Hülse, wobei in der Wand der hohlzylindrischen Hülse nach innen vorspringende Einprägungen eingebracht sind, die in Richtung des Einpressvorganges des Elastomerlagers in die Hülse betrachtet trichterartige Verengungen des freien Querschnitts der Hülse bilden und an der Außenschale des Elastomerlagers anliegen. Dabei greifen die Einprägungen in zumindest eine rillenförmige Aussparung in der Außenschale des Elastomerlagers ein, welche Aussparung(en) hinsichtlich Form und Abmessung an die Einprägungen angepasst ist bzw. sind.

Im Sinne vorteilhafter Weiterbildungen können in einer im wesentlichen senkrecht auf der Zylinderachse der Hülse liegenden Ebene betrachtet über dem Umfang der Hülse vorzugsweise im wesentlichen gleichmäßig verteilt mehrere sich jeweils über eine gewisse Länge in Richtung der Zylinderachse erstreckende Einprägungen eingebracht sein und/oder es können in mehreren im wesentlichen senkrecht auf der Zylinderachse der Hülse liegenden Ebenen in der Wand der Hülse solche Einprägungen vorgesehen sein. Vorzugsweise liegen die genannten Einprägungen im zusammengebauten Zustand eines erfindungsgemäßen Verbunds unter andauernder elastischer Verformung in den Aussparungen an der Wand der Außenschale an.

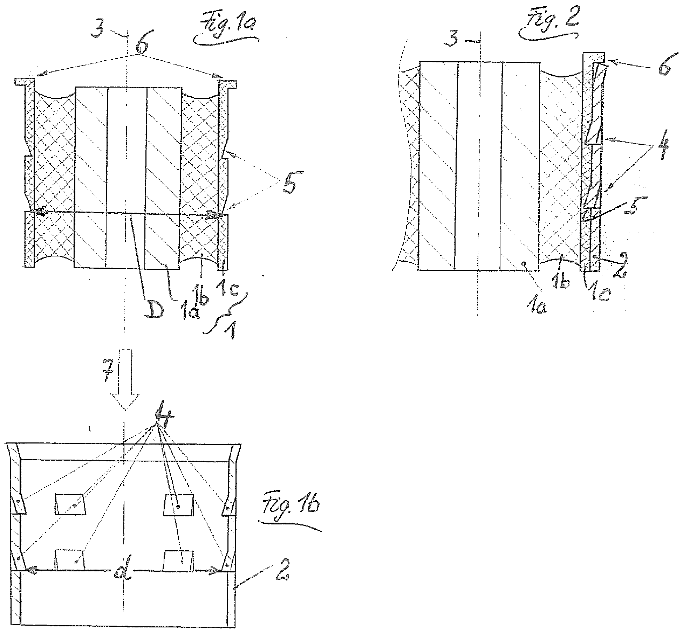

Zur näheren Erläuterung der Erfindung wird auf die beigefügten Figuren 1a, 1b und 2 verwiesen, in denen ein Ausführungsbeispiel jeweils in Längsschnitten gezeigt ist. Dabei ist in Fig. 1a das in seiner Gesamtheit mit der Bezugsziffer 1 gekennzeichnete Elastomerlager alleine und in Fig. 1b die in ihrer Gesamtheit mit der Bezugsziffer 2 gekennzeichnete Hülse alleine dargestellt, während in Fig.2 der Verbund dieser beiden Bauelemente im zusammengefügten Zustand (teilweise abgebrochen) gezeigt ist.

Ein bzw. das Elastomerlager 1 besteht wie üblich aus drei grundsätzlichen Bestandteilen, nämlich einem inneren Halteteil 1 a in Form eines Hohlzylinders mit Kreisringquerschnitt, einem dieses umgebenden Elastomerelement 1 b und einer dieses einhüllenden ebenfalls hohlzylindrischen Außenschale 1 c, die vorliegend aus einem Kunststoffmaterial besteht. An ihrem in der Figurendarstellung oberen Ende weist die Außenschale 1 c einen Bund 6 auf und in deren Zylinder-Aussenwand sind vorliegend in zwei senkrecht zur Zylinderachse 3 liegenden Ebenen umlaufende Aussparungen 5 eingebracht, wobei der Begriff der "Ebene" hier nicht streng geometrisch zu verstehen ist, nachdem diese Aussparungen 5 eine gewisse Längserstreckung in Richtung der genannten Zylinderachse 3 besitzen.

Dieses Elastomerlager 1 soll nun gemäß Pfeilrichtung 7 (vgl. zusammenschauend Figuren 1a, 1b) in eine in ihren Abmessungen an die Außenschale 1 c des Elastormerlagers 1 angepasste und aus einem Metallwerkstoff bestehende Hülse 2 eingepresst werden. Wie Fig. 1b zeigt, sind in die Wand der hohlzylindrischen Hülse 2 nach innen vorspringende Einprägungen 4 eingebracht. Dabei sind in einer senkrecht auf der Zylinderachse 3 der Hülse 2 liegenden Ebene betrachtet über dem Umfang der Hülse 2 gleichmäßig verteilt mehrere, hier sechs sich jeweils über eine gewisse Länge in Richtung der Zylinderachse 3 erstreckende Einprägungen 4 eingebracht, und es sind in mehreren, hier zwei senkrecht auf der Zylinderachse 3 der Hülse 2 liegenden Ebenen in der Wand der Hülse 2 solche Einprägungen 4 vorgesehen, wobei (abermals) der Begriff der "Ebene" nicht streng geometrisch zu verstehen ist, nachdem diese Einprägungen 4 eine gewisse Längserstreckung in Richtung der Zylinderachse 3 besitzen.

Diese soeben genannten zwei Ebenen von Einprägungen 4 sind derart platziert, dass diese Einprägungen 4 im zusammengefügten Zustand von Hülse 2 und Elastomerlager 1 wie Fig.2 zeigt in die entsprechend geformtem rillenförmigen Aussparungen 5 in der Außenschale 1 c eingreifen, wobei die Einprägungen 4 und die Aussparungen 5 hinsichtlich Form und Abmessungen aneinander angepasst sind, derart; dass die Einprägungen 4 quasi in den Aussparungen 5 an der Wand der Außenschale 1 c anliegen. Dabei stellen die Einprägungen 4 in Richtung des Einpressvorgangs gemäß Pfeilrichtung 7 des Elastomerlagers 1 in die Hülse 2 quasi trichterartige Verengungen des freien Querschnitts der Hülse 2 dar. Beim Einpressen des Elastomerlagers 1 in die Hülse 2 gleitet die Außenschale 1 c unter elastischer Verformung über die Abschrägungen der Einprägungen 4, welche sich hierbei ebenfalls elastisch verformen können und rastet schließlich in der Endlage, die durch das Aufliegen des Bundes 6 auf der in den Figurendarstellungen oberen Kante der Hülse 2 bestimmt ist, mit ihren Aussparungen 5 in die Einprägungen 4 der Hülse 2 ein. Auch dabei kann vorzugsweise noch eine geringfügige elastische Verformung der Außenschale 1c und/oder der Einprägungen 4 vorliegen, so dass die Einprägungen 4 im zusammengebauten Zustand dieses erfindungsgemäßen Verbunds unter andauernder elastischer Verformung in den Aussparungen 5 an der Wand der Außenschale 1 c anliegen. Dies kann dadurch erreicht werden, dass im nicht zusammengebauten Zustand der geringste Außendurchmesser D der Außenschale 1c im Bereich der Aussparungen 5 geringfügig größer ist als der geringste Innendurchmesser d der Hülse 2 im Bereich der Einprägungen 4.

Auf die beschriebene Weise ist ein optimaler Formschluss hergestellt und somit ein sicherer und insbesondere auch dauerhafter Festsitz gebildet, der wie beschrieben fertigungstechnisch einfach dargestellt werden kann, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Formschlüssiger Verbund aus einem Elastomerlager (1) und einer dessen kreiszylindrische Außenschale (1c) umgebenden Hülse (2), wobei in der Wand der hohlzylindrischen Hülse (2) nach innen vorspringende Einprägungen (4) eingebracht sind, die in Richtung (7) des Einpressvorganges des Elastomerlagers (1) in die Hülse (2) betrachtet trichterartige Verengungen des freien Querschnitts der Hülse (2) bilden, und an der der Außenschale (1c) des Elastomerlagers (1) anliegen,
**dadurch gekennzeichnet, dass** die Einprägungen (4) in zumindest eine rillenförmige Aussparung (5) in der Außenschale (1c) des Elastomerlagers (1) eingreifen, die hinsichtlich Form und Abmessungen an die Einprägungen (4) angepasst ist.

2. Formschlüssiger Verbund nach Anspruch 1, **dadurch gekennzeichnet, dass** in mehreren im wesentlichen senkrecht auf der Zylinderachse (3) der Hülse (2) liegenden Ebenen in der Wand der Hülse (2) solche Einprägungen (4) und Aussparungen (6) vorgesehen sind.

3. Formschlüssiger Verbund nach Anspruch 1 oder 2, **dadurch gekennzeichnet, dass** die Einprägungen (4) unter elastischer Verformung in den Aussparungen (5) an der Wand der Außenschale (1 c) anliegen.

## Claims

1. A form-locking connection consisting of an elastomeric bearing (1) and a sleeve (2) surrounding the circular-cylindrical outer shell (1c) of the bearing, wherein introduced into the wall of the hollow-cylindrical sleeve (2) are inwardly projecting imprints (4) which form funnel-like constrictions of the free cross section of the sleeve (2), seen in the direction (7) of the pressing-in procedure of the elastomeric bearing (1) into the sleeve (2), and which rest on the outer shell (1c) of the elastomeric bearing (1), **characterised in that** the imprints (4) engage in at least one channel-shaped recess (5) in the outer shell (1c) of the elastomeric bearing (1), which recess is adapted to the imprints (4) in respect of form and dimensions.

2. A form-locking connection according to claim 1, **characterised in that** imprints (4) and recesses (6) of this type are provided in the wall of the sleeve (2) in a plurality of planes, located substantially vertically on the cylinder axis (3) of the sleeve (2).

3. A form-locking connection according to claim 1 or claim 2, **characterised in that** the imprints (4) rest against the wall of the outer shell (1c) in the recesses (5) with elastic deformation.

## Revendications

1. Corps composite à liaison par la forme constituée d'un palier élastomère (1) et d'un manchon (2) entourant sa coque externe (1c) en forme de cylindre circulaire, dans lequel dans la paroi du manchon cylindrique creux (2) sont installés des empreintes (4) faisant saillie vers l'intérieur, qui forment dans la direction (7) du processus d'introduction à force du palier élastomère (1) dans le manchon (2) des rétrécissements de type entonnoirs de la section libre de ce manchon (2) et sur lesquels s'appuie la coque externe (1c) du palier élastomère (1),
**caractérisé en ce que**
les empreintes (4) viennent en prise dans au moins un évidement (5) en forme de rainure de la coque externe (1c) du palier élastomère (1) dont la forme et les dimensions sont adaptées aux empreintes (4).

2. Corps composite à liaison par la forme conforme à la revendication 1,
**caractérisé en ce que**
des empreintes (4) et des évidements (6) sont prévus dans la paroi du manchon (2) dans plusieurs plans situés essentiellement perpendiculairement à l'axe (3) du manchon (2).

3. Corps composite à liaison par la forme conforme à la revendication 1 ou 2,
**caractérisé en ce que**
les empreintes (4) s'appliquent dans les évidements (5) la paroi de la coque externe (1c) par déformation élastique.
